# EUROPÄISCHE PATENTSCHRIFT

(11) **EP 3 544 127 B1**
(45) Veröffentlichungstag und Bekanntmachung des Hinweises auf die Patenterteilung: **10.11.2021**
(21) Anmeldenummer: 18163148.2
(22) Anmeldetag: 21.03.2018
(51) Int. Cl.: H01R 13/70, H01R 25/14

(54) **STROMSCHIENENADAPTER, ANORDNUNG MIT EINER STROMSCHIENE SOWIE VERFAHREN ZUM ANSCHLIESSEN EINES STROMSCHIENENADAPTERS IN EINER STROMSCHIENE**
BUSBAR ADAPTER, ARRANGEMENT COMPRISING A CONDUCTOR RAIL AND METHOD FOR CONNECTING A CONDUCTOR RAIL ADAPTER IN A CONDUCTOR RAIL
ADAPTATEUR POUR RAILS CONDUCTEURS, DISPOSITIF À RAIL CONDUCTEUR ET PROCÉDÉ DE RACCORDEMENT D'UN ADAPTATEUR POUR RAILS CONDUCTEURS DANS UN RAIL CONDUCTEUR

(43) Veröffentlichungstag der Anmeldung: 25.09.2019
(73) Patentinhaber: Eutrac Stromschienen GmbH, 12277 Berlin (DE)
(72) Erfinder: BLIESKE, Jan, 10587 Berlin (DE); DINNEBIER, Johannes, 10587 Berlin (DE)
(74) Vertreter: De Gregori, Antonella

(56) Entgegenhaltungen:
- EP-A1- 0 015 356
- US-A- 3 718 886

## Beschreibung

Die Erfindung betrifft einen Stromschienenadapter, eine Anordnung mit einer Stromschiene sowie Verfahren zum Anschließen eines Stromschienenadapters in einer Stromschiene.

### Hintergrund

Solche Stromschienenadapter werden genutzt, um ein oder mehrere Verbrauchereinrichtungen, bspw. Lampen, an eine Stromschiene anzukoppeln, über die eine elektrische Energie bereitgestellt und verteilt wird. Hierbei wird der Stromschienenadapter lösbar an der Stromschiene befestigt. Es erfolgt eine elektrische Kontaktierung mittels Ausbilden einer elektrischen Verbindung zwischen den elektrischen Leitern der Stromschiene und elektrischen Anschlüssen des Adapters. Darüber hinaus erfolgt regelmäßig eine mechanische Befestigung des Stromschienenadapters an der Stromschiene. Über eine Anschlusseinrichtung des Stromschienenadapters kann eine elektrische Verbrauchereinrichtung angeschlossen werden, zum Beispiel eine Beleuchtungseinrichtung.

Aus dem Dokument DE 39 02 695 A1 ist ein Stromabnehmer für eine elektrische Stromschiene bekannt, welcher zum Betätigen von Befestigungsfingern und Phasen-kontaktfingern eine Nockenwellen-Mechanismus aufweist.

Im Dokument DE 22 105 16 ist ein Adapter für Stromschienen offenbart, bei dem Kreisscheibensegmente als Kontaktglieder genutzt werden.

Das Dokument EP 0 241 318 A2 sieht bei einem Stromschienenadapter ein schwenkbares Betätigungselement vor, mit dem Verriegelungselemente betätigt werden, wenn das schwenkbare Betätigungselement in eine eingeschwenkte Stellung verlagert wird, so dass hierdurch eine mechanische Befestigung des Stromschienenadapters an der Stromschiene bewirkt wird.

Auch bei einem elektrischen Verbinder im Dokument EP 0 074 754 A2 ist ein schwenkbares Bauteil vorgesehen. Kontaktfahnen durchgreifen in einer Ausgangsstellung, wenn das schwenkbare Bauteil eingeschwenkt ist, jeweils eine zugeordnete Gehäuseöffnung, derart, dass die vom Gehäuse außen abstehenden Kontaktfahnen Stromschienenkontakte kontaktieren. Wird das schwenkbare Bauteil ausgeschwenkt, so werden die Kontaktfahnen gegen eine Vorspannung zwangsweise in das Gehäuse des Verbinders eingefahren. Der Verbinder kann in die Stromschienen eingesetzt oder aus dieser entfernt werden. Beim Einschwenken des schwenkbaren Bauteils schwenken die Kontaktfahnen infolge der Vorspannung selbsttätig aus dem Gehäuse heraus und schließen, sofern ein vollständiges Ausschwenken aufgrund eines korrekten Einführens in die Stromschiene ermöglicht ist, die elektrischen Kontakte.

Ein weiterer Stromschienenadapter ist aus dem Dokument DE 69 303 843 T2 bekannt. Am Adaptergehäuse ist eine Einstellvorrichtung schwenkbar gelagert, mit deren Hilfe streifenförmige Kontaktarme quer zu ihrer Längsrichtung so verschwenkt werden können, so dass Kontaktzungen in und außer Berührung mit Leiterschienen der Stromschiene gebracht werden können.

Im Dokument DE 20 2010 004 783 U1 ist ein Stromschienenadapter zum Befestigen einer Leuchte oder eines Strahlers an einer u-förmigen Stromschiene beschrieben. An einer äußeren Umfangsfläche sind verschiebbare Betätigungselemente angeordnet, mit denen mechanische Verriegelungselemente und / oder elektrische Kontakte von einer eingeschwenkten in eine ausgeschwenkte Position überführbar sind.

Das Dokument DE 2 250 738 A1 offenbart eine lösbare Stromabnehmervorrichtung für eine einen im Wesentlichen u-förmigen Querschnitt aufweisende Stromschiene. Ein Betätigungshebel ist um eine auf dem Boden eines Sockelteils aufrechtstehende Schaltachse schwenkbar und dient zum Ein- und Ausschwenken von flügelartig ausgebildeten Verriegelungsgliedern.

Aus dem Dokument EP 2 822 108 B1 sind ein Stromschienenadapter sowie eine Anordnung mit Stromschienenadapter und Stromschiene bekannt. Der Stromschienenadapter weist an dem Gehäuse ein Betätigungselement auf, welches zwischen einer Losstellung und einer Koppelstellung verlagerbar ist. An dem Betätigungselement ist ein Zwangselement angeordnet, welches einen keilförmigen Abschnitt aufweist.

Das Dokument EP 0 015 356 A1 offenbart einen Stromschienenadapter zum Einsetzen in eine Stromschiene, welcher drei Kontaktelemente aufweist, die alle aus einer Seite des Gehäuses heraus verlagerbar sind, um Drähte in der Stromschiene zu kontaktieren. Der Adapter kann um 180° gedreht in die Stromschiene eingesetzt werden, um andere Kontaktierungen herzustellen. Zum Verlagern der Kontaktelemente ist eine drehbare Nockenwelle vorgesehen, welche eine erste feste Nocke zum Verlagern eines Neutralleiterkontakts und eine axial bewegliche Nocke aufweist, um wahlweise einen der beiden anderen Kontakte zu verlagern. Ein Verriegelungsmechanismus kann vorgesehen sein, um den Adapter in einer Stromschiene zu arretieren und gegebenenfalls ein ungesichertes Drehen der Nockenwelle zu verhindern.

US 3 718 886 A offenbart den Oberbegriff des Anspruchs 1.

### Zusammenfassung

Aufgabe der Erfindung ist es, einen Stromschienenadapter, eine Anordnung mit Stromschiene und Stromschienenadapter sowie ein Verfahren zum Kontaktieren eines Stromschienenadapters anzugeben, die eine vereinfachte Montage des Stromschienenadapters an der Stromschiene sowie eine flexible Kontaktierung von Kontaktelementen des Stromschienenadapters ermöglichen.

Zur Lösung ist ein Stromschienenadapter nach dem unabhängigen Anspruch 1 geschaffen. Weiterhin sind eine Anordnung mit einer Stromschiene und einem Stromschienenadapter sowie ein Verfahren zum Anschließen eines Stromschienenadapters in einer Stromschiene nach Anspruch 13 geschaffen. Ausgestaltungen sind Gegenstand von abhängigen Unteransprüchen.

Nach einem Aspekt ist ein Stromschienenadapter mit einem Gehäuse und Kontaktelementen geschaffen. An den Kontaktelementen ist jeweils ein elektrischer Anschluss gebildet. Die Kontaktelemente sind in dem Gehäuse verlagerbar angeordnet, derart, dass die Kontaktelemente jeweils zwischen einer ausgefahrenen Stellung, in welcher der elektrische Anschluss im Bereich einer Seitenfläche am Gehäuse außen übersteht und mittels des elektrischen Anschlusses ein elektrischer Kontakt zu (Leitern) einer Stromschiene ausbildbar ist, und einer eingefahrenen Stellung verlagerbar sind, in welcher der elektrische Anschluss im Gehäuse angeordnet und der elektrische Kontakt gelöst ist. Es ist eine Einzelnockenwelle vorgesehen, die in dem Gehäuse drehbar angeordnet ist und eine Anordnung von Nocken aufweist, die zum Betätigen der Kontaktelemente jeweils mindestens einem der Kontaktelemente zugeordnet sind, derart, dass die Kontaktelemente mittels Drehen der Einzelnockenwelle jeweils zwischen der eingefahrenen und der ausgefahrenen Stellung verlagerbar sind.

Nach einem weiteren Aspekt ist eine Anordnung mit einer Stromschiene, die einen Montageraum für ein oder mehrere Stromschienenadapter aufweist, und einem Stromschienenadapter geschaffen, welcher in dem Montageraum der Stromschiene angeordnet ist.

Nach einem anderen Aspekt ist ein Verfahren zum Anschließen eines Stromschienenadapters in einer Stromschiene geschaffen. Bei dem Verfahren wird ein Stromschienenadapter mit einem Gehäuse und Kontaktelementen bereitgestellt, an denen jeweils ein elektrischer Anschluss gebildet und welche in dem Gehäuse verlagerbar angeordnet sind, derart, dass die Kontaktelemente jeweils zwischen einer ausgefahrenen Stellung, in welcher der elektrische Anschluss im Bereich einer Seitenfläche am Gehäuse außen übersteht und mittels des elektrischen Anschlusses ein elektrischer Kontakt zu einer Stromschiene ausbildbar ist, und einer eingefahrenen Stellung verlagerbar sind, in welcher der elektrische Anschluss im Gehäuse angeordnet und der elektrische Kontakt gelöst ist. Der Stromschienenadapter wird in einer Stromschiene angeordnet und in der Stromschiene kontaktiert, wobei hierbei eine Einzelnockenwelle, die in dem Gehäuse des Stromschienen-adapters drehbar angeordnet ist und eine Anordnung von Nocken aufweist, die jeweils mindestens einem der Kontaktelemente zugeordnet sind, gedreht wird, derart, dass mindestens eines der Kontaktelemente aus der eingefahrenen in die ausgefahrene Stellung verlagert und hierdurch einen elektrischen Anschluss der Stromschiene kontaktiert.

Bei dem Stromschienenadapter sind die mehreren Kontaktelemente mit nur einer einzigen Nockenwelle betätigbar, um jeweils zwischen der eingefahrenen und der ausgefahrenen Stellung verlagert zu werden. In der ausgefahrenen Stellung, wenn der elektrische Anschluss des Kontaktelements im Bereich der Seitenfläche am Gehäuse außen übersteht, erfolgt eine elektrische Kontaktierung mit einem gegenüberliegenden elektrischen Anschluss oder Kontakt der Stromschiene, wenn der Stromschienenadapter in die Stromschien eingesetzt ist. Die Einzelnockenwelle ist drehbar, um ein oder mehrere der Kontaktelemente ein- und auszufahren. Auf flexible Art und Weise können in den verschiedenen Drehstellungen der Einzelnockenwelle unterschiedliche Konfigurationen von aus- und eingefahrenen Kontaktelementen bereitgestellt werden. Hierzu bedarf es nur des Drehens der Einzelnockenwelle.

Die Kontaktelemente können jeweils fußseitig an einem Kontaktblock angeordnet sein, welcher in dem Gehäuse lösbar angeordnet ist. Es kann vorgesehen sein, dass die Kontaktelemente verdrehsicher an einem Kontaktblock angeordnet sind. Hierzu können die Kontaktelemente eine oder mehrere Biegungen aufweisen, die zum Beispiel S- oder U-förmige Abschnitte aufweisen und mit einem oder mehreren Vorsprüngen am Kontaktblock verdrehsichernd zusammenwirken, wenn das Kontaktelement fußseitig eingesteckt ist.

Die Kontaktelemente können fußseitig lösbar in eine zugeordnete Kontaktaufnahme an dem Kontaktblock eingesteckt sein. Sie können dort elektrisch verbunden und mechanisch gesichert sein. Alternativ kann eine Befestigung mittels eines Schraubkontakts vorgesehen sein. Die Kontaktaufnahme für die Kontaktelemente an dem Kontaktblock kann für alle Kontaktelemente gleich sein. Alternativ können verschiedene Ausgestaltungen vorgesehen sein. Der Kontaktblock kann seinerseits in dem Gehäuse lösbar montiert sein. Das lösbare Anordnen des Kontaktblocks in dem Gehäuse ermöglicht die Nutzung von wechsel- oder austauschbaren Kontaktblöcken, um den Stromschienenadapter beispielsweise an unterschiedliche Einsatzanforderungen anzupassen, zum Beispiel unterschiedliche Anwendungen, in denen eine verschiedene Anzahl von Kontaktelementen benötigt wird. An dem Kontaktblock können die Kontaktelemente auf einer Seite lösbar angeordnet sein. Auf einer gegenüberliegenden Seite kann der Kontaktblock Kontaktanschlüsse aufweisen, um den Kontaktblock elektrisch anzuschließen, insbesondere zum Übertragen einer über die Kontaktelemente an der Stromschiene abgegriffenen elektrischen Spannung. Die Kontaktanschlüsse des Kontaktblocks können mittels zugeordneter Kontaktsteckaufnahmen mit Zuleitungen zu einer anmontierten Leuchte verbunden sein..

Die Einzelnockenwelle kann lösbar in dem Gehäuse angeordnet sein. Auf diese Weise ist die Einzelnockenwelle austauschbar in dem Gehäuse montiert. Es kann vorgesehen sein, eine erste und eine zweite Nockenwelle bereitzustellen, die verschiedene Anordnungen von Nocken aufweisen und jeweils in dem Gehäuse des Stromschienenadapters montierbar sind. Einzelnockenwellen mit unterschiedlichen Nockenwellenprofilen können vorgesehen sein. Hierdurch kann der Stromschienenadapter an unterschiedliche Anwendungszwecke angepasst werden, zum Beispiel an unterschiedliche Anforderungen in verschiedenen Ländern, beispielweise in Europa und den USA. Mit den Kontaktelementen können zum Beispiel Kontaktelemente für drei Phasen und einen Nullleiter oder zwei Phasen und zwei Nullleiter gebildet sein.

Es kann ein Bausatz vorgesehen sein, welcher für die Montage in dem Gehäuse des Stromschienenadapters die erste und die zweite Einzelnockenwelle aufweist. Alternativ oder ergänzend kann der Bausatz mit einem ersten und einem zweiten Kontaktblock ausgeführt sein, die unterschiedliche Konfigurationen für die Kontaktelemente bereitstellen, beispielsweise mit einer unterschiedlichen Anzahl von Kontaktelementen.

Ein erstes der Kontaktelemente kann eine Verkröpfung aufweisen, und ein Nocken, welcher einem zweiten der Kontaktelemente zum Betätigen des zweiten Kontaktelements zugeordnet ist, kann in einer Drehstellung der Einzelnockenwelle im Bereich der Verkröpfung und in einer anderen Drehstellung der Einzelnockenwelle außerhalb des Bereichs der Verkröpfung angeordnet sein. Mittels der Verkröpfung, die mit einem verkröpften Abschnitt des ersten Kontaktelements gebildet ist, kann für das erste Kontaktelement eine Art "Umgehung" bereitgestellt sein, wenn der Nocken im Bereich der Verkröpfung angeordnet ist, sodass das erste Kontaktelement hierbei nicht betätigt wird, also insbesondere nicht in die ausgefahrene Stellung verlagert wird. Das erste Kontaktelement ist mittels der Verkröpfung um den Nocken herumgeführt. Hierbei kann das erste Kontaktelement im Bereich der Verkröpfung mit dem Nocken zur Anlage kommen oder berührungsfrei hiervon angeordnet sein, wenn sich der Nocken im Bereich der Verkröpfung befindet oder dieser gegenüberliegend angeordnet ist. Sowohl in der Drehstellung wie auch in der anderen Drehstellung der Einzelnockenwelle bewirkt der Nocken jedoch keine Betätigung des ersten Kontaktelements. Vielmehr entfaltet der Nocken seine Betätigungswirkung im Zusammenhang mit dem zweiten Kontaktelement. Das Vorsehen einer Verkröpfung an einem oder mehreren der Kontaktelemente kann eine kompakte Bauweise des Stromschienenadapters unterstützen.

Mindestens ein erster Nocken der Anordnung von Nocken ist zum Betätigen zwei der Kontaktelemente, die in Bezug auf die Einzelnockenwelle auf gegenüberliegenden Seiten angeordnet sind, gemeinsam zugeordnet, derart, dass in verschiedenen Drehstellungen der Einzelnockenwelle jeweils genau eines der zwei Kontaktelemente mittels des ersten Nocken in der ausgefahrenen Stellung verlagert ist. Das Ausfahren der zwei Kontaktelemente kann auf gegenüberliegenden Seiten des Gehäuses des Stromschienenadapters erfolgen.

Mindestens ein zweiter Nocken der Anordnung von Nocken kann zum Betätigen nur genau einem der Kontaktelemente zugeordnet sein, derart, dass das eine Kontaktelement beim Drehen der Einzelnockenwelle mittels des zweiten Nockens zwischen der eingefahren und der ausgefahrenen Stellung verlagerbar ist. Der zweite Nocken ist frei von einer Betätigung eines anderen oder weiteren Kontaktelements, wenn die Einzelnockenwelle gedreht wird. Es ist hier eine ausschließliche Zuordnung des zweiten Nockens zu dem genau einen Kontaktelement vorgesehen.

Die Kontaktelemente und die Nocken der Anordnung von Nocken können jeweils in mehreren übereinanderliegenden Ebenen angeordnet sein. In den übereinanderliegenden Ebenen kann jeweils nur ein Nocken der Anordnung von Nocken vorgesehen sein. In den Ebenen der Kontaktelemente, die wahlweise einzeln oder mehrfach mit den Ebenen der Nocken zusammenfallen, können ein oder mehrere Kontaktelemente angeordnet sein. Es kann vorgesehen sein, dass die Nocken in wenigstens drei übereinanderliegenden Ebene angeordnet sind.

Mindestens eines der Kontaktelemente kann eine U-förmige Biegung aufweisen, die das Aus- und Einfahren des Kontaktelementes relativ zur Drehung der Einzelnockenwelle beschleunigt und den Hub erhöht, so dass Überlagerungen in Zwischenstellungen der Einzelnockenwelle vermeiden werden. Beim Drehen der Einzel nockenwelle kann die Betätigung eines Kontaktes innerhalb eines kurzen Drehwinkels geschlossen oder gelöst werden, um eine Überschneidung bei der Betätigung von Kontakten zu vermeiden. Kontaktelemente mit mindestens einer U-förmigen Biegung erreichen den notwendigen Hub des Kontaktelementes in dem zur Verfügung stehenden Drehwinkel.

Die Einzelnockenwelle kann funktionell an eine Verriegelungseinrichtung koppeln, welche in einer Verriegelungsstellung die Einzelnockenwelle in einer Ausgangsdrehstellung sichert und in einer Entriegelungsstellung das Drehen der Einzelnockenwelle zulässt. Mithilfe der Verriegelungseinrichtung kann die Einzelnockenwelle in der Ausgangsstellung und wahlweise in wenigstens einer weiteren Drehstellung gesichert sein. Dieses bedeutet, dass die Einzelnockenwelle gegen ein Drehen gesperrt ist, wenn die Verriegelungseinrichtung in der Verriegelungsstellung ist. Nach dem Entriegeln ist ein Drehen der Einzelnockenwelle ermöglicht. Es kann vorgesehen sein, dass eine Verlagerung der Verriegelungseinrichtung aus der Verriegelungsstellung in die Entriegelungsstellung gesperrt ist, wenn der Stromschienenadapter in einer zugeordneten Stromschiene nicht korrekt montiert ist. Bei nicht korrekter Montage des Stromschienenadapters in der Stromschiene ist eine Verlagerung der Verriegelungseinrichtung aus der Verriegelungsstellung in die Entriegelungsstellung gesperrt. Beispielsweise kann vorgesehen sein, dass ein Bauteil der Verriegelungseinrichtung beim Übergang von der Verriegelungsstellung in die Entriegelungsstellung wenigstens teilweise in eine zugeordnete Aufnahme oder Ausnehmung an der Stromschiene verlagert wird. Wenn der Stromschienenadapter nicht korrekt und funktionsgerecht in der Stromschiene angeordnet ist, ist diese Verlagerung gesperrt. Nur bei korrekter Montage des Stromschienenadapters in der Stromschiene ist es dem Bauteil ermöglicht, in die Entriegelungsstellung verlagert zu werden. Hierbei kann vorgesehen sein, dass ein Abschnitt des Bauteils zumindest in der Verriegelungsstellung teilweise oder vollständig in das Gehäuse des Stromschienenadapters hinein verlagert ist und beim Verlagern in die Entriegelungsstellung aus dem Gehäuse heraus verlagert wird.

Die Verriegelungseinrichtung kann ein Verriegelungselement aufweisen, welches gegen eine Verlagerung aus einer Verriegelungsstellung des Verriegelungselements, in welcher die Verriegelungseinrichtung verriegelt ist, in eine Entriegelungsstellung des Verriegelungselements, in welcher die Verriegelungseinrichtung entriegelt ist, vorgespannt ist. Das Vorspannen kann mittels einer Feder ausgeführt sein, die dem Verriegelungselement zugeordnet ist. Bei dem Verriegelungselement kann es sich zum Beispiel um das Bauteil handeln, welches vorangehend erläutert wurde. Das Verriegelungselement kann mit einem Schieber gebildet sein, welcher beim Verlagern zwischen Verriegelungsstellung und Entriegelungsstellung verschoben wird. Hierbei kann ein Endabschnitt des Schieberelements in die zugeordnete Aufnahme oder Öffnung des Gehäuses des Stromschienenadapters verlagert werden, wenn die Verriegelungseinrichtung entriegelt wird und so das Drehen der Einzelnockenwelle freigibt. Alternativ oder ergänzend kann ein dreh- oder rotierbares Verriegelungselement vorgesehen sein.

Die Verriegelungseinrichtung kann bewegliche, dem Verriegelungselement zugeordnete Elemente in der Außenwand des Gehäuses aufweisen, zum Beispiel Gehäusefahnen, deren Bewegung in einer Stellung von dem Verriegelungselement blockiert wird, so dass eine mechanische Verbindung zwischen dem Stromschienenadapter und der Stromschiene ausgebildet ist.

Die Einzelnockenwelle kann zum Drehen werkzeuglos betätigbar sein. Hierzu kann an dem Gehäuse des Stromschienenadapters ein Betätigungselement vorgesehen sein, welches der Benutzer manuell ohne Werkzeug betätigen kann, beispielsweise ein Dreh- oder ein Schiebeelement, wobei eine Schiebebewegung mittels eines Getriebes in die Drehbewegung der Einzelnockenwelle umzusetzen ist. Alternativ kann an dem Gehäuse ein mittels eines Werkzeuges betätigbares Betätigungselement vorgesehen sein, beispielsweise mittels eines Schraubendrehers. Das Betätigungselement kann in eine Gehäuseausnehmung oder -öffnung eingelassen sein und beispielsweise einen Schlitz oder einen Sechskant aufweisen, um den Schraubendreher oder einen geeigneten Schlüssel anzusetzen. Eine Außenfläche des Betätigungselements kann fluchtend mit einer Gehäuseoberfläche des Gehäuses des Stromschienenadapters ausgebildet sein. Bei dieser Ausführungsform kann das Betätigungselement vollständig in das Gehäuse des Stromschienenadapters eingelassen sein, bei der werkzeuglosen Betätigung kann das Betätigungselement aus dem Gehäuse herausstehen.

Das Gehäuse kann mehrere Gehäuseteile aufweisen, die Kontaktelemente können in einem ersten Gehäuseteil und einer Treiberschaltung, mit der im Betrieb eine Treiberspannung bereitgestellt wird, in einem zweiten Gehäuseteil angeordnet sein. Hierdurch ist ein modularer Gehäuseaufbau bereitgestellt. Im Bereich einer Gehäuseverbindung können das erste und das zweite Gehäuseteil stirnseitig lösbar miteinander verbunden sein. Die beiden Gehäuseteile können ein Basisgehäuse, in welchem die Kontaktelemente und die Einzelnockenwelle aufgenommen sind, sowie ein ansetzbares oder anbaubares Modulgehäuse bilden, in welchem weitere Funktionskomponenten für das Stromschienenadapter aufgenommen sind, insbesondere die Treiberschaltung. Das zweite Gehäuseteil kann bündig an das erste Gehäuseteil ansetzend ausgebildet sein. Es kann vorgesehen sein, das erste und das zweite Gehäuseteil vor einer Montage in der Stromschiene lösbar zu verbinden. Alternativ kann das Ausbilden der Verbindung zwischen den Gehäuseteilen erfolgen, nachdem das erste oder das zweite Gehäuseteil zuvor in der Stromschiene montiert wurde. Im Bereich der Gehäuseverbindung können stirnseitige Gehäusewände des ersten und des zweiten Gehäuseteil aufeinanderliegend angeordnet sein. In dem zweiten Gehäuseteil kann eine DALI-Stromversorgung (DALI - "Digital Addressable Lighting Interface") bereitgestellt sein.

Am Gehäuse des Stromschienenadapters kann ein Anschluss für das lösbare Montieren einer Beleuchtungseinrichtung vorgesehen sein.

Die Kontaktelemente in dem Gehäuse des Stromschienenadapters können aus einem Drahtmaterial sein, wobei das Drahtmaterial einen flachen oder einen runden Querschnitt aufweisen kann.

Die Nocken der Anordnung auf der Nockenwelle können an die Nockenwelle einstückig angeformt sein. Alternativ kann vorgesehen sein, dass eine oder mehrere der Nocken lösbar auf der Nockenwelle montiert sind, beispielsweise mittels einer Klemmschraube.

Die Kontaktelemente können sich in dem Gehäuse des Stromschienenadapters im Wesentlichen in Längsrichtung erstrecken. Über ihre Gesamtlänge können ein oder mehrere Kontaktelemente gerade und gerundete Abschnitte aufweisen.

Die vorangehend für den Stromschienenadapter erläuterten Ausführungen können im Zusammenhang mit der Anordnung, welche den in der Stromschiene montierten Stromschienenadapter aufweist, und / oder in Verbindung mit dem Verfahren zum Anschließen des Stromschienenadapters in der Stromschiene entsprechend vorgesehen sein.

Bei der Anordnung kann der Stromschienenadapter bündig in der Stromschiene aufgenommen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung eines Stromschienenadapters, bei dem ein Wandabschnitt eines Gehäuses abgenommen ist;
- Fig. 2: eine weitere schematische perspektivische Darstellung des Stromschienenadapters aus Fig. 1;
- Fig. 3: schematische perspektivische Darstellungen eines Kontaktblocks mit hieran angeordneten und hiervon gelösten Kontaktelementen;
- Fig. 4: eine vergrößerte schematische perspektivische Darstellung eines Abschnitts des Stromschienenadapters aus Fig. 1;
- Fig. 5: schematische Darstellungen für verschiedene Drehstellungen einer Einzelnockenwelle zum Betätigen der Kontaktelemente;
- Fig. 6: eine schematische Darstellung eines Stromschienenadapters mit Basisgehäuse und hieran lösbar montiertem Modulgehäuse;
- Fig. 7: eine schematische perspektivische Darstellung einer Anordnung mit Stromschienenadapter und Stromschiene und
- Fig. 8: eine weitere schematische Darstellung eines Stromschienenadapters mit Basisgehäuse und hieran lösbar montiertem Modulgehäuse.

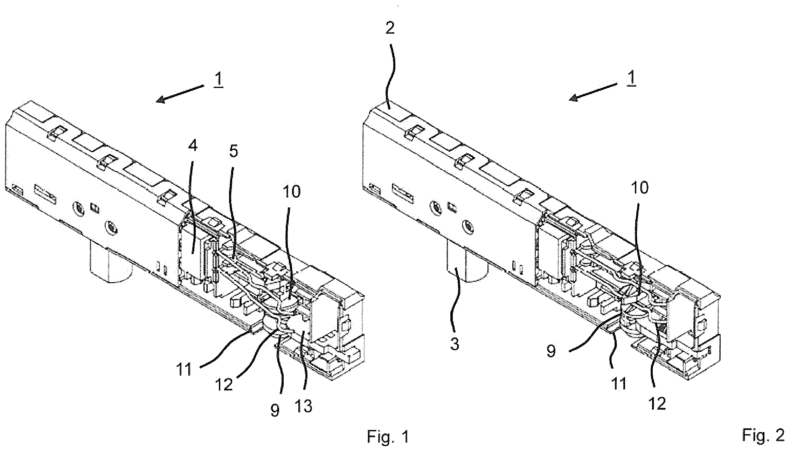

Fig. 1 zeigt eine schematische perspektivische Darstellung eines Stromschienenadapters 1 mit einem Gehäuse 2, an dem eine Aufnahme 3 angeordnet ist. Die Aufnahme 3 dient zur lösbaren Montage einer Beleuchtungseinrichtung (nicht dargestellt), die an dem Stromschienenadapter 1 zum Betrieb montiert werden kann.

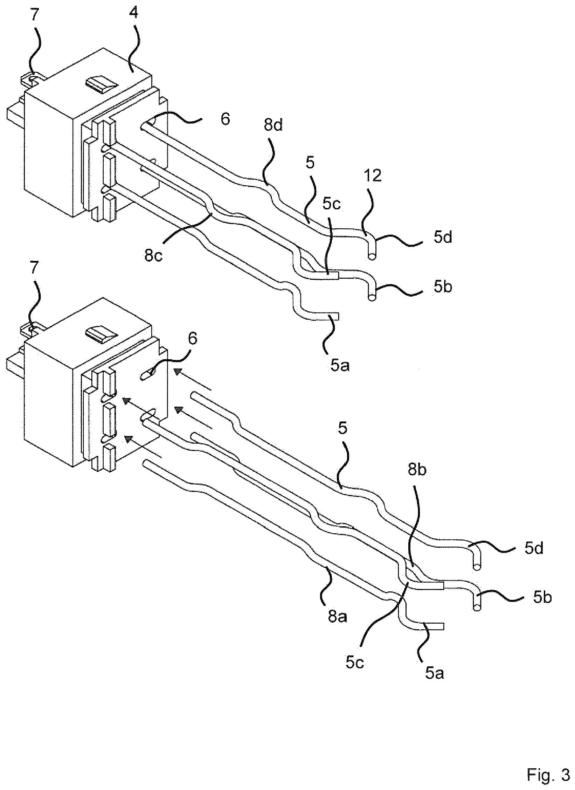

In dem Gehäuse 2 ist ein Kontaktblock 4 lösbar montiert. Der Kontaktblock 4 ist in Fig. 3 weiter im Detail gezeigt. An dem Kontaktblock 4 sind vorderseitig Kontaktelemente 5 mit unteren Kontaktelementen 5a, 5b und mit oberen Kontaktelementen 5c, 5d in zugeordneten Kontaktaufnahmen 6 angeordnet, wobei diese Montage bei der gezeigten Ausführungsform lösbar erfolgt, beispielsweise mittels Steckkontakten. Rückseitig sind an dem Kontaktblock 4 Kontaktanschlüsse 7 vorgesehen, welche dazu dienen, den Kontaktblock 4 in dem Gehäuse 2 elektrisch zu kontaktieren, sodass über die Kontaktelemente 5 aufgenommene elektrische Energie in dem Stromschienenadapter 1 vom Kontaktblock 4 an eine Treibereinrichtung weitergegeben werden kann, die zum Bereitstellen einer Treiberspannung für den Betrieb der Beleuchtungseinrichtung dient, wie dies als solches in verschiedenen Ausführungsformen bekannt ist.

Gemäß Fig. 3 weisen untere Kontaktelemente 5a, 5b im Unterschied zu oberen Kontaktelementen 5c, 5d eine jeweilige Verkröpfung 8a, 8b auf. Die oberen Kontaktelemente 5c, 5d weisen jeweils eine U-förmige Biegung 8c, 8d auf.

Gemäß den Fig. 1 und 2 ist in dem Gehäuse 2 des Stromschienenadapters 1 den Kontaktelementen 5 eine Einzelnockenwelle 9 mit einer Anordnung von Nocken 10 zugeordnet. Die Nockenwelle 9 ist drehbar an einer Gehäuseaufnahme 11 gelagert. Mittels der Anordnung von Nocken 10 können die Kontaktelemente 5 jeweils zwischen einer eingefahrenen und einer Ausgefahrenen Stellung verlagert werden. In der ausgefahrenen Stellung ist das oder sind die Kontaktelemente 5 nach außen verlagert, derart, dass ein jeweiliger elektrischer Anschluss 12 der Kontaktelemente 5 durch eine zugeordnete Öffnung in dem Gehäuse 2 hindurch nach außen übersteht (vgl. Fig. 2 - ausgefahrene Stellung), was das Ausbilden einer elektrischen Kontaktierung mit einem zugeordneten elektrischen Anschluss einer Stromschiene (nicht dargestellt) ermöglicht, in die der Stromschienenadapter 1 zum Betrieb eingebracht wird. In Fig. 1 sind die elektrischen Anschlüsse 12 in einer eingefahrenen Stellung.

Die Kontaktelemente 5, die beispielsweise aus einem Drahtmaterial bestehen, dass einen flachen oder einen runden Querschnitt aufweisen kann, sind gegen die Verlagerung in die ausgefahrene Stellung vorgespannt und kehren so selbsttätig in die eingefahrene Stellung zurück, wenn die von einer zugeordneten Nocke der Anordnung von Nocken 10 zum Ausfahren bereitgestellte Druckkraft nachlässt, wenn die Nocke von dem zugeordneten Kontaktelement 5 weggedreht wird beim Drehen der Einzelnockenwelle 9. Die Vorspannung gegen das Verlagern in die ausgefahrene Stellung besteht aufgrund der Biegespannung der Kontaktelemente 5.

Während die Biegung im Bereich des elektrischen Anschlusses 12 und die U-förmigen Biegungen 8c, 8d in einer horizontalen Ebene ausgebildet ist, erstrecken sich die Verkröpfungen 8a, 8b in einer hierzu quer ausgerichteten horizontalen Ebene.

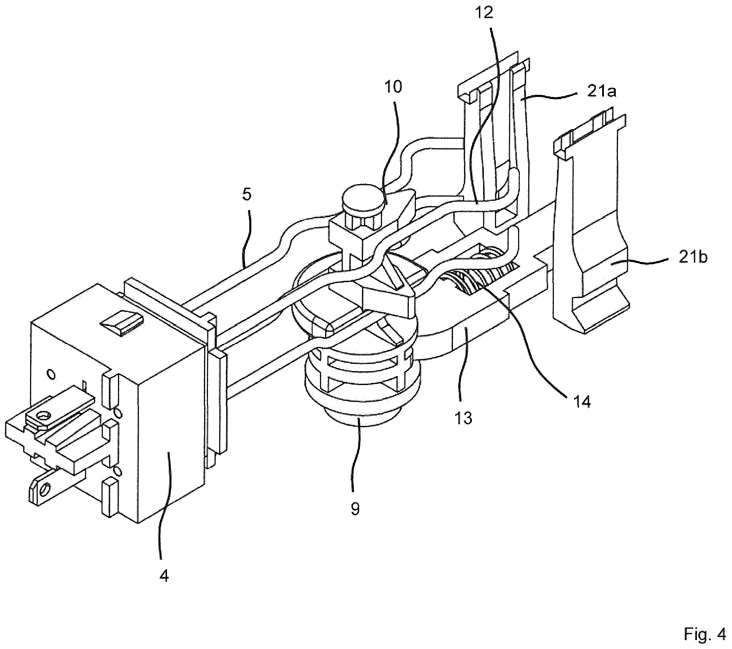

Fig. 4 zeigt eine vergrößerte perspektivische Darstellung von Elementen des Stromschienenadapters aus den Fig. 1 und 2 mit dem Kontaktblock 4, den Kontaktelementen 5 sowie der Einzelnockenwelle 10. Der Einzelnockenwelle 10 ist ein in der gezeigten Ausführung als Schieberelement ausgeführtes Verriegelungselement 13 zugeordnet. Das Verriegelungselement 13 ist in Fig. 4 in einer Verriegelungsstellung gezeigt, in weicher das Verriegelungselement 13 die Nockenwelle 9 in der momentanen Drehstellung sichert und gegen ein Drehen sperrt. Das Verriegelungselement 13 ist mithilfe einer Feder 14 gegen eine Verlagerung aus der gezeigten Verriegelungsstellung in eine Entriegelungsstellung vorgespannt. In der Entriegelungsstellung ist die Nockenwelle 9 für ein Drehen freigegeben, wodurch dann das Aus- und Einfahren der Kontaktelemente 5 mithilfe der Anordnung von Nocken 10 ermöglicht ist.

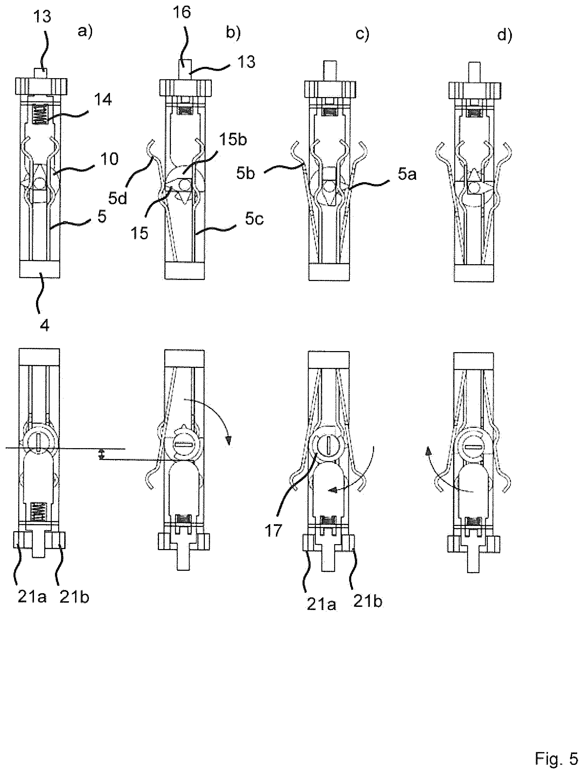

Fig. 5 zeigt schematische Darstellungen für verschiedene Drehstellungen der Einzelnockenwelle 9. Die dargestellte Anordnung mit dem Kontaktblock 4, den Kontaktelementen 5 sowie der Einzelnockenwelle 9 ist jeweils von oben und von unten gezeigt. In der Drehstellung a) ist die Einzelnockenwelle 9 in einer Ausgangsstellung, in der die Einzelnockenwelle 9 mittels des Verriegelungselements 13 gegen Verdrehen gesichert ist. Keines der Kontaktelemente 5 ist in einer ausgefahrenen Stellung. Vielmehr sind alle Kontaktelemente 5 in der eingefahrenen Stellung, in welcher die elektrischen Anschlüsse 12 nicht nach außen über das Gehäuse 2 des Stromschienenadapters 1 überstehen.

In der Drehstellung b) drücken ein erster Nocken 15a das obere Kontaktelement 5d und ein zweiter Nocken 15b gleichzeitig das dahinter / darunter befindliche Kontaktelement 5b in die ausgefahrene Stellung. Hierbei wird das Verriegelungselement 13 gegen die Vorspannung der Feder 14 nach außen gedrückt. Ist der Stromschienenadapter 1 korrekt in eine Stromschiene eingesetzt, kann das distale Ende des Verriegelungselementes 13 zwischen Fahnen 21a, 21b am Gehäuse 2 geschoben werden und stellt dann eine mechanische Verbindung zur Stromschiene her. Erfolgte die Montage des Stromschienenadapters 1 in der Stromschiene nicht funktionsgerecht, steht für die Bewegung des distalen Endes 16 die zugeordnete Öffnung zwischen den Fahnen 21a, 21b nicht zur Verfügung, sodass das Verriegelungselement 13 nicht in die Entriegelungsstellung verlagert werden kann. Auf diese Weise ist eine Sicherungsmaßnahme für die korrekte Montage des Stromschienenadapters 1 in dem Montageraum einer zugeordneten Stromschiene geschaffen.

In der Drehstellung c) in Fig. 5 sind mittels der Anordnung von Nocken 10 und Nocken 5b an der Einzelnockenwelle 9 die unteren Kontaktelemente 5a, 5b in die ausgefahrene Stellung verlagert wohingegen die oberen Kontaktelemente 5c, 5d in der eingefahrenen Stellung angeordnet sind.

Bei der Drehstellung d) in Fig. 5 sind jeweils eines der unteren Kontaktelemente 5a, 5b und eines der oberen Kontaktelemente 5c, 5d in der ausgefahrenen Stellung.

Es kann vorgesehen sein, dass ein Kontaktelement für einen Nullleiter in mehreren Drehstellungen der Einzelnockenwelle ausgefahren ist, zum Beispiel in drei Drehstellungen, wohingegen andere Kontaktelemente nur in jeweils einer der Drehstellungen ausgefahren sind.

In Verbindung mit den Drehstellungen b), c) und d) drückt ein dem Verriegelungselement 13 zugeordneter Nocken 17 gegen das Verriegelungselement 13, um dieses gegen die Vorspannung der Feder 14 zu verlagern. Der Nocken 17 ist gemeinsam mit der Anordnung von Nocken 10 an der Einzelnockenwelle 9 angeordnet.

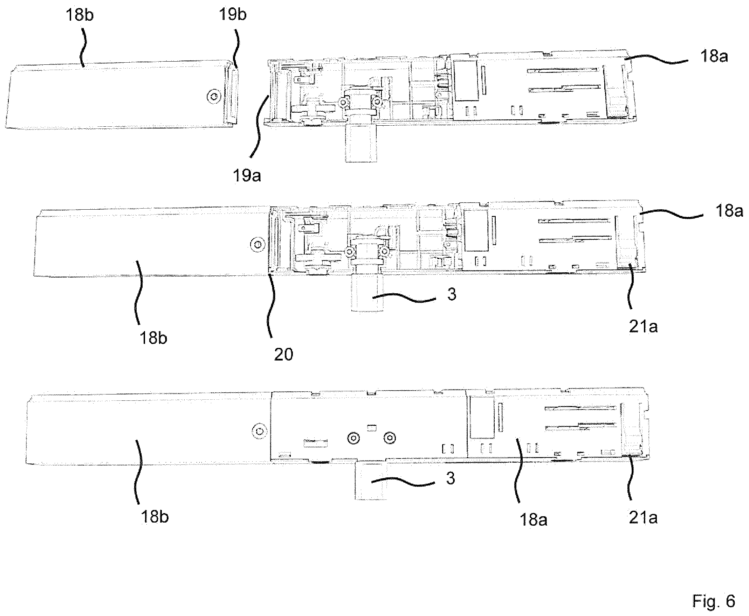

Fig. 6 zeigt schematische perspektivische Darstellungen für den Stromschienenadapter 1, wobei an einem ersten Gehäuseteil 18a, welches ein Basisgehäuse mit der vorangehend beschriebenen Kontaktierungseinrichtung und der Aufnahme 3 bildet, und ein hieran stirnseitig bündig angeordnetes zweites Gehäuseteil 18b aufweist, welches ein Modulgehäuse bildet und lösbar montiert ist. In dem Modulgehäuse 18b kann eine Treiberschaltung angeordnet sein, mit welcher die über die Kontaktelemente 5 abgegriffene elektrische Spannung in eine Treiberspannung für die anzukoppelnde Beleuchtungseinrichtung gewandelt wird. Stirnseitige Gehäuseflächen 19a, 19b sind ein sind einander gegenüberliegend angeordnet im Bereich einer Gehäuseverbindung 20 zwischen dem Basisgehäuse und dem Modulgehäuse.

Am ersten Gehäuseteil 18a auf gegenüberliegenden Seiten ausgebildete Fahnen 21a, 21b (vgl. auch Fig. 5) wirken mit dem Verriegelungselement 13 zusammen, derart, dass die elastisch federnden Fahnen 21a, 21b beim Einführen in der Stromschiene zunächst nach innen gedrückt werden (vgl. linke Darstellung unten in Fig. 5) und somit verhindern, dass das Verriegelungselement 13 sich in einer Richtung von der Einzelnockenwelle 9 weg bewegt. In dieser Stellung sperrt das Verriegelungselement 13 die Einzelnockenwelle 9 gehen verdrehen. Wenn der Stromschienenadapter 1 dann korrekt in der Stromschien angeordnet ist, bewegen sich die Fahnen 21a, 21b in ihre Ausgangsstellung zurück (vgl. weitere Darstellungen in Fig. 5 unten) und geben das Verriegelungselement 13 frei, welches sich nach hinten bewegt, seinerseits die Einzelnockenwelle 9 zum Verdrehen freigibt und sich zwischen die Fahnen 21a, 21b schiebt, dort verhindert, dass diese sich ins Gehäuse bewegen können und damit eine mechanische Verbindung des Stromschienenadapters 1 zur Stromschiene herstellt.

Das Verriegelungselement 13 bewegt sich in der Entriegelungsstellung zwischen die Fahnen 21a, 21b, blockiert damit deren Bewegung nach innen und stellt damit eine mechanische Verriegelung des Stromschienenadapters 1 mit der Stromschiene her.

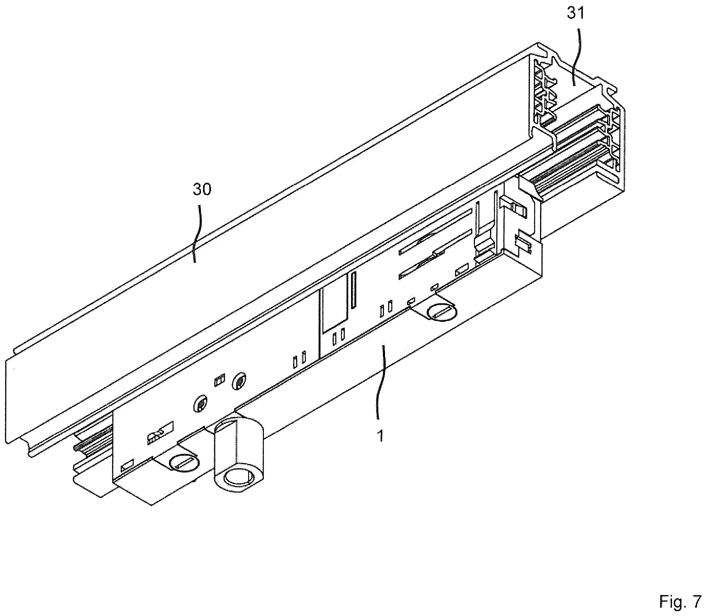

Fig. 7 zeigt eine schematische perspektivische Darstellung einer Stromschiene 30 mit einem Montageraum 31, in den der Stromschienenadapter 1 eingeführt werden soll.

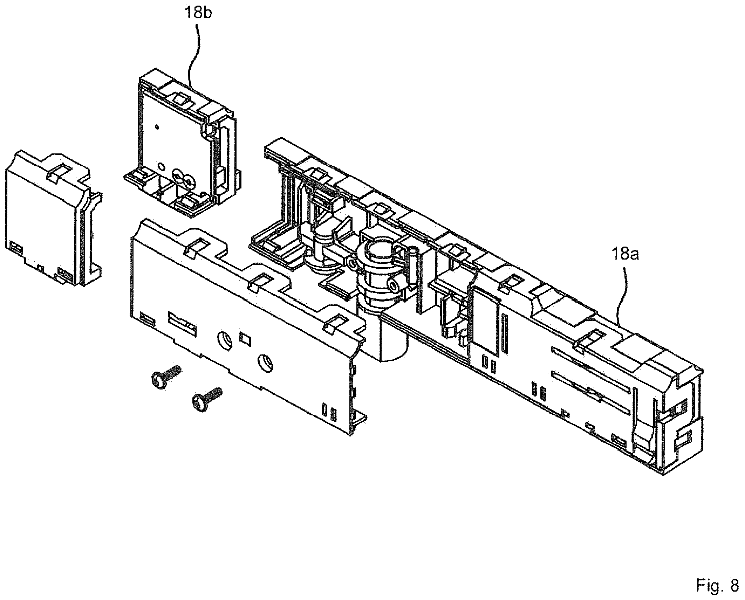

Fig. 8 zeigt eine weitere perspektivische Darstellung eines Stromschienenadapters mit einem ersten und einem zweiten Gehäusebauteil 18a, 18b.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Stromschienenadapter (1), mit:
- einem Gehäuse (2);
- Kontaktelementen (5), an denen jeweils ein elektrischer Anschluss (12) gebildet und welche in dem Gehäuse (2) verlagerbar angeordnet sind, derart, dass die Kontaktelemente (5) jeweils zwischen einer ausgefahrenen Stellung, in welcher der elektrische Anschluss (12) im Bereich einer Seitenfläche am Gehäuse (2) außen übersteht und mittels des elektrischen Anschlusses (12) ein elektrischer Kontakt zu einer Stromschiene ausbildbar ist, und einer eingefahrenen Stellung verlagerbar sind, in welcher der elektrische Anschluss (12) im Gehäuse (2) angeordnet und der elektrische Kontakt gelöst ist; und
- einer Einzelnockenwelle (9), die in dem Gehäuse (2) drehbar angeordnet ist und eine Anordnung von Nocken (10) aufweist, die zum Betätigen der Kontaktelemente (5) jeweils mindestens einem der Kontaktelemente (5) zugeordnet sind, derart, dass die Kontaktelemente (5) mittels Drehen der Einzelnockenwelle (9) jeweils zwischen der eingefahrenen und der ausgefahrenen Stellung verlagerbar sind;
wobei mindestens ein erster Nocken der Anordnung von Nocken (10) zum Betätigen zwei der Kontaktelemente (5), die in Bezug auf die Einzelnockenwelle (9) auf gegenüberliegenden Seiten angeordnet sind, gemeinsam zugeordnet ist, derart, dass in verschiedenen Drehstellungen der Einzelnockenwelle (9) jeweils genau eines der zwei Kontaktelemente mittels des ersten Nocken in der ausgefahrenen Stellung verlagert ist. **dadurch gekennzeichnet, dass** sich die Kontaktelemente (5) in dem Gehäuse (2) im Wesentlichen in Längsrichtung erstrecken, wobei die Einzelnockenwelle (9) um eine Drehachse in dem Gehäuse (2) drehbar ist, welche sich im Wesentlichen quer zur Längsrichtung erstreckt, und wobei der Stromschienenadapter (1) ausgebildet ist, derart in einen Montageraum (31) einer Stromschiene (30) eingeführt zu werden, dass die Längsrichtung des Gehäuses (2) sich parallel zu einer Längsrichtung der Stromschiene (30) erstreckt.

2. Stromschienenadapter (1) nach Anspruch 1, **dadurch gekennzeichnet, dass** die Kontaktelemente jeweils fußseitig an einem Kontaktblock (4) angeordnet sind, welcher in dem Gehäuse (2) lösbar angeordnet ist.

3. Stromschienenadapter (1) nach Anspruch 1 oder 2, **dadurch gekennzeichnet, dass** die Einzelnockenwelle (9) lösbar in dem Gehäuse (2) angeordnet ist.

4. Stromschienenadapter (1) nach mindestens einem der vorangehenden Ansprüche, **dadurch gekennzeichnet, dass**
- ein erstes der Kontaktelemente (5) eine Verkröpfung (8a; 8b) aufweist und
- ein Nocken, welcher einem zweiten der Kontaktelemente (5) zum Betätigen des zweiten Kontaktelements zugeordnet ist, in einer Drehstellung der Einzelnockenwelle (9) im Bereich der Verkröpfung (8a; 8b) und in einer anderen Drehstellung der Einzelnockenwelle (9) außerhalb des Bereichs der Verkröpfung (8a; 8b) angeordnet ist.

5. Stromschienenadapter (1) nach mindestens einem der vorangehenden Ansprüche, **dadurch gekennzeichnet, dass** mindestens ein zweiter Nocken der Anordnung von Nocken (10) zum Betätigen nur genau einem der Kontaktelemente (5) zugeordnet ist, derart, dass das eine Kontaktelement beim Drehen der Einzelnockenwelle (9) mittels des zweiten Nockens zwischen der eingefahren und der ausgefahrenen Stellung verlagerbar ist.

6. Stromschienenadapter (1) nach mindestens einem der vorangehenden Ansprüche, **dadurch gekennzeichnet, dass** die Kontaktelemente (5) und die Nocken der Anordnung von Nocken (10) jeweils in mehreren übereinanderliegenden Ebenen angeordnet sind.

7. Stromschienenadapter (1) nach mindestens einem der vorangehenden Ansprüche, **dadurch gekennzeichnet, dass** die Einzelnockenwelle (9) funktionell an eine Verriegelungseinrichtung koppelt, welche in einer Verriegelungsstellung die Einzelnockenwelle (9) in einer Ausgangsdrehstellung sichert und in einer Entriegelungsstellung das Drehen der Einzelnockenwelle (9) zulässt.

8. Stromschienenadapter (1) nach Anspruch 7, **dadurch gekennzeichnet, dass** die Verriegelungseinrichtung ein Verriegelungselement (13) aufweist, welches gegen eine Verlagerung aus einer Verriegelungsstellung des Verriegelungselements (13), in welcher die Verriegelungseinrichtung verriegelt ist, in eine Entriegelungsstellung des Verriegelungselements (13), in welcher die Verriegelungseinrichtung entriegelt ist, vorgespannt ist.

9. Stromschienenadapter (1) nach mindestens einem der vorangehenden Ansprüche, **dadurch gekennzeichnet, dass** die Einzelnockenwelle (9) zum Drehen werkzeuglos betätigbar ist.

10. Stromschienenadapter (1) nach mindestens einem der vorangehenden Ansprüche, **dadurch gekennzeichnet, dass**
- das Gehäuse (2) mehrere Gehäuseteile aufweist;
- die Kontaktelemente (5) in einem ersten Gehäuseteil (18a) und eine Treiberschaltung, mit der im Betrieb eine Treiberspannung bereitgestellt wird, in einem zweiten Gehäuseteil (19b) angeordnet sind; und
- im Bereich einer Gehäuseverbindung das erste und das zweite Gehäuseteil (18a, 18b) stirnseitig lösbar miteinander verbunden sind.

11. Stromschienenadapter (1) nach Anspruch 10, **dadurch gekennzeichnet, dass** im Bereich einer Gehäuseverbindung (20) stirnseitige Gehäusewände (19a, 19b) des ersten und des zweiten Gehäuseteil (18a, 18b) aufeinanderliegend angeordnet sind.

12. Anordnung, mit einer Stromschiene (30), die einen Montageraum (31) für ein oder mehrere Stromschienenadapter aufweist, und einem Stromschienenadapter (1) nach mindestens einem der vorangehenden Ansprüche, welcher in dem Montageraum (31) der Stromschiene (30) angeordnet ist.

13. Verfahren zum Anschließen eines Stromschienenadapters (1) in einer Stromschiene, mit:
- Bereitstellen eines Stromschienenadapters (1) mit einem Gehäuse (2) und Kontaktelementen (5), an denen jeweils ein elektrischer Anschluss (12) gebildet und welche in dem Gehäuse (2) verlagerbar angeordnet sind, derart, dass die Kontaktelemente (5) jeweils zwischen einer ausgefahrenen Stellung, in welcher der elektrische Anschluss (12) im Bereich einer Seitenfläche am Gehäuse (2) außen übersteht und mittels des elektrischen Anschlusses (12) ein elektrischer Kontakt zu einer Stromschiene ausbildbar ist, und einer eingefahrenen Stellung verlagerbar sind, in welcher der elektrische Anschluss (12) im Gehäuse (2) angeordnet und der elektrische Kontakt gelöst ist;
- Anordnen des Stromschienenadapters (1) in einer Stromschiene (30) und
- Kontaktieren des Stromschienenadapters (1) in der Stromschiene (30), wobei hierbei eine Einzelnockenwelle (9), die in dem Gehäuse (2) des Stromschienenadapters (1) drehbar angeordnet ist und eine Anordnung von Nocken (10) aufweist, die jeweils mindestens einem der Kontaktelemente (5) zugeordnet sind, gedreht wird, derart, dass mindestens eines der Kontaktelemente (5) aus der eingefahrenen in die ausgefahrene Stellung verlagert und hierdurch einen elektrischen Anschluss der Stromschiene (30) kontaktiert,
wobei mindestens ein erster Nocken der Anordnung von Nocken (10) zum Betätigen zwei der Kontaktelemente (5), die in Bezug auf die Einzelnockenwelle (9) auf gegenüberliegenden Seiten angeordnet sind, gemeinsam zugeordnet ist, derart, dass in verschiedenen Drehstellungen der Einzelnockenwelle (9) jeweils genau eines der zwei Kontaktelemente mittels des ersten Nocken in der ausgefahrenen Stellung verlagert wird,
**dadurch gekennzeichnet, dass** sich die Kontaktelemente (5) in dem Gehäuse (2) im Wesentlichen in Längsrichtung erstrecken, wobei die Einzelnockenwelle (9) um eine Drehachse in dem Gehäuse (2) drehbar ist, welche sich im Wesentlichen quer zur Längsrichtung erstreckt, und wobei der Stromschienenadapter (1) ausgebildet ist, derart in einen Montageraum (31) einer Stromschiene (30) eingeführt zu werden, dass die Längsrichtung des Gehäuses (2) sich parallel zu einer Längsrichtung der Stromschiene (30) erstreckt.

## Claims

1. Busbar adapter (1), with:
- a housing (2);
- contact elements (5), on each of which an electrical terminal (12) is formed and which are arranged displaceably in the housing (2), in such a way that the contact elements (5) are displaceable respectively between an extended position in which the electrical terminal (12) protrudes on the outside in the area of a side surface on the housing (2) and an electrical contact can be formed as a busbar by means of the electrical terminal (12), and a retracted position in which the electrical terminal (12) is arranged in the housing (2) and the electrical contact is detached; and
- a single camshaft (9) which is rotatably arranged in the housing (2) and has an arrangement of cams (10) which, for actuating the contact elements (5), are respectively associated to at least one of the contact elements (5), such that through rotation of the single camshaft (9) the contact elements (5) can be displaced respectively between the retracted and the extended position; wherein at least one first cam of the arrangement of cams (10) for actuating two of the contact elements (5), which are arranged on opposite sides with respect to the single camshaft (9), is jointly associated, such that in different rotary positions of the single camshaft (9) exactly one of the two contact elements is displaced in the extended position by means of the first cam, **characterized in that** the contact elements (5) in the housing (2) extend essentially in the longitudinal direction, the single camshaft (9) being rotatable about an axis of rotation in the housing (2) which extends essentially transversely to the longitudinal direction, and wherein the busbar adapter (1) is adapted to be inserted into a mounting space (31) of a busbar (30) in such a way that the longitudinal direction of the housing (2) extends parallel to a longitudinal direction of the busbar (30).

2. Busbar adapter (1) according to claim 1, **characterized in that** the contact elements are each arranged on the foot side on a contact block (4) which is detachably arranged in the housing (2).

3. Busbar adapter (1) according to claim 1 or 2, **characterized in that** the single camshaft (9) is detachably arranged in the housing (2).

4. Busbar adapter (1) according to at least one of the preceding claims, **characterized in that**
- a first of the contact elements (5) has a bend (8a; 8b) and
- a cam, which is associated to a second of the contact elements (5) for actuating the second contact element, is arranged in a rotary position of the single camshaft (9) in the area of the bend (8a; 8b) and in another rotary position of the single camshaft (9) outside the area the bend (Sa; Sb).

5. Busbar adapter (1) according to at least one of the preceding claims, **characterized in that** at least one second cam of the arrangement of cams (10) for actuation is only associated to exactly one of the contact elements (5), such that the one contact element during the rotation of the single camshaft (9) is displaceable between the retracted and the extended position by means of the second cam.

6. Busbar adapter (1) according to at least one of the preceding claims, **characterized in that** the contact elements (5) and the cams of the arrangement of cams (10) are arranged respectively in several superposed planes.

7. Busbar adapter (1) according to at least one of the preceding claims, **characterized in that** the single camshaft (9) is functionally coupled to a locking device which, in a locking position, secures the single camshaft (9) in an initial rotary position and in an unlocking position allows the rotation of the single camshaft (9).

8. Busbar adapter (1) according to claim 7, **characterized in that** the locking device has a locking element (13) which is biased against a displacement from a locking position of the locking element (13), in which the locking device is locked, into an unlocking position of the locking element (13), in which the locking device is unlocked.

9. Busbar adapter (1) according to at least one of the preceding claims, **characterized in that** the single camshaft (9) can be actuated without tools for rotation.

10. Busbar adapter (1) according to at least one of the preceding claims, **characterized in that**
- the housing (2) has several housing parts;
- the contact elements (5) are arranged in a first housing part (18a) and a driver circuit, with which a driver voltage is provided during operation, is arranged in a second housing part (19b); and
- in the area of a housing connection, the first and second housing parts (18a, 18b) are detachably connected to one another frontally.

11. Busbar adapter (1) according to claim 10, **characterized in that** in the area of a housing connection (20) frontal housing walls (19a, 19b) of the first and second housing parts (18a, 18b) are arranged one on top of the other.

12. Arrangement with a busbar (30) which has a mounting space (31) for one or more busbar adapters, and a busbar adapter (1) according to at least one of the preceding claims, which is arranged in the mounting space (31) of the busbar (30).

13. Process for connecting a busbar adapter (1) in a busbar, with:
- providing a busbar adapter (1) with a housing (2) and contact elements (5), on each of which an electrical terminal (12) is formed and which are arranged displaceably in the housing (2), in such a way that the contact elements (5) are displaceable respectively between an extended position in which the electrical terminal (12) protrudes on the outside in the area of a side surface on the housing (2) and an electrical contact can be formed as a busbar by means of the electrical terminal (12), and a retracted position in which the electrical terminal (12) is arranged in the housing (2) and the electrical contact is detached;
- arranging the busbar adapter (1) in a busbar (30) and
- contacting the busbar adapter (1) in the busbar (30), wherein hereby a single camshaft (9) which is rotatably arranged in the housing (2) of the busbar adapter (1) and has an arrangement of cams (10), which are respectively at least associated to one of the contact elements (5), is rotated in such a way that at least one of the contact elements (5) is displaced from the retracted to the extended position and thereby makes contact with an electrical terminal of the busbar (30),
wherein at least one first cam of the arrangement of cams (10) for actuating two of the contact elements (5), which are arranged on opposite sides with respect to the single camshaft (9), is jointly associated, such that in different rotary positions of the single camshaft (9) exactly one of the two contact elements is displaced in the extended position by means of the first cam, **characterized in that** the contact elements (5) in the housing (2) extend essentially in the longitudinal direction, the single camshaft (9) being rotatable about an axis of rotation in the housing (2) which extends essentially transversely to the longitudinal direction, and wherein the busbar adapter (1) is adapted to be inserted into a mounting space (31) of a busbar (30) in such a way that the longitudinal direction of the housing (2) extends parallel to a longitudinal direction of the busbar (30).

## Revendications

1. Adaptateur de barre omnibus (1), avec :
- un boîtier (2) ;
- des éléments de contact (5), sur chacun desquels est réalisée une borne électrique (12) et qui sont disposés de manière déplaçable dans le boîtier (2), de telle sorte que les éléments de contact (5) peuvent être déplacés respectivement entre une position étendue dans laquelle la borne électrique (12) fait saillie à l'extérieur dans la zone d'une surface latérale sur le boîtier (2) et un contact électrique peut être formé en tant que barre omnibus au moyen de la borne électrique (12), et une position rétractée dans laquelle la borne électrique (12) est disposée dans le boîtier (2) et le contact électrique est détaché ; et
- un arbre à cames unique (9) qui est agencé de manière rotative dans le boîtier (2) et présente un agencement de cames (10) qui, pour l'actionnement des éléments de contact (5), sont chacune associée à au moins un des éléments de contact (5), de telle sorte que par rotation de l'arbre à cames unique (9) les éléments de contact (5) peuvent être déplacés respectivement entre la position rétractée et la position étendue ;
dans lequel au moins une première came de l'agencement de cames (10) pour l'actionnement de deux des éléments de contact (5), qui sont disposés sur des côtés opposés par rapport à l'arbre à cames unique (9), est associée conjointement, de sorte que dans de différentes positions de rotation de l'arbre à cames unique (9) respectivement exactement un des deux éléments de contact est déplacé dans la position étendue au moyen de la première came, **caractérisé en ce que** les éléments de contact (5) dans le boîtier (2) s'étendent essentiellement dans la direction longitudinale, l'arbre à cames unique (9) pouvant tourner autour d'un axe de rotation dans le boîtier (2) qui s'étend essentiellement transversalement à la direction longitudinale, et dans lequel l'adaptateur de barre omnibus (1) est formé pour être inséré dans un espace de montage (31) d'une barre omnibus (30) de telle manière que la direction longitudinale du boîtier (2) s'étende parallèlement à une direction longitudinale de la barre omnibus (30).

2. Adaptateur de barre omnibus (1) selon la revendication 1, **caractérisé en ce que** les éléments de contact sont chacun disposés côté pied sur un bloc de contact (4) qui est disposé de manière détachable dans le boîtier (2).

3. Adaptateur de barre omnibus (1) selon la revendication 1 ou 2, **caractérisé en ce que** l'arbre à cames unique (9) est disposé de manière détachable dans le boîtier (2).

4. Adaptateur de barre omnibus (1) selon au moins l'une des revendications précédentes, **caractérisé en ce que**
- un premier des éléments de contact (5) comporte un coude (8a ; 8b) et
- une came, qui est associée à un deuxième des éléments de contact (5) pour actionner le deuxième élément de contact, est agencée dans une position de rotation de l'arbre à cames unique (9) dans la zone du coude (8a ; 8b) et dans une autre position de rotation de l'arbre à cames unique (9) en dehors de la zone du coude (Sa ; Sb).

5. Adaptateur de barre omnibus (1) selon au moins l'une des revendications précédentes, **caractérisé en ce qu'**au moins une deuxième came de l'agencement de cames (10) pour l'actionnement n'est associée qu'à exactement un des éléments de contact (5), de sorte que l'un élément de contact pendant la rotation de l'arbre à cames unique (9) peut être déplacé entre la position rétractée et la position étendue au moyen de la deuxième came.

6. Adaptateur de barre omnibus (1) selon au moins l'une des revendications précédentes, **caractérisé en ce que** les éléments de contact (5) et les cames de l'agencement de cames (10) sont disposés respectivement dans plusieurs plans superposés.

7. Adaptateur de barre omnibus (1) selon au moins l'une des revendications précédentes, **caractérisé en ce que** l'arbre à cames unique (9) est couplé fonctionnellement à un dispositif de verrouillage qui, dans une position de verrouillage, bloque l'arbre à cames unique (9) dans une position initiale de rotation et dans une position de déverrouillage permet la rotation de l'arbre à cames unique (9).

8. Adaptateur de barre omnibus (1) selon la revendication 7, **caractérisé en ce que** le dispositif de verrouillage présente un élément de verrouillage (13) qui est précontraint contre le déplacement d'une position de verrouillage de l'élément de verrouillage (13), dans laquelle le dispositif de verrouillage est verrouillé, dans une position de déverrouillage de l'élément de verrouillage (13), dans laquelle le dispositif de verrouillage est déverrouillé.

9. Adaptateur de barre omnibus (1) selon au moins l'une des revendications précédentes, **caractérisé en ce que** l'arbre à cames unique (9) peut être actionné sans outils pour tourner.

10. Adaptateur de barre omnibus (1) selon au moins l'une des revendications précédentes, **caractérisé en ce que**
- le boîtier (2) comporte plusieurs parties de boîtier ;
- les éléments de contact (5) sont disposés dans une première partie de boîtier (18a) et un circuit de commande, avec lequel une tension de commande est fournie pendant le fonctionnement, dans une deuxième partie de boîtier (19b) ; et
- dans la zone d'un raccordement du boîtier, les première et deuxième parties de boîtier (18a, 18b) sont reliées l'une à l'autre de manière détachable frontalement.

11. Adaptateur de barre omnibus (1) selon la revendication 10, **caractérisé en ce que** dans la zone d'un raccordement du boîtier (20), des parois frontales de boîtier (19a, 19b) des première et deuxième parties de boîtier (18a, 18b) sont disposées l'une sur l'autre.

12. Agencement avec une barre omnibus (30) qui présente un espace de montage (31) pour un ou plusieurs adaptateurs de barre omnibus, et avec un adaptateur de barre omnibus (1) selon au moins l'une des revendications précédentes, qui est disposé dans l'espace de montage (31) de la barre omnibus (30).

13. Procédé de raccordement d'un adaptateur de barre omnibus (1) dans une barre omnibus, avec :
- fournir un adaptateur de barre omnibus (1) avec un boîtier (2) et des éléments de contact (5), sur chacun desquels est réalisée une borne électrique (12) et qui sont disposés de manière déplaçable dans le boîtier (2), de telle sorte que les éléments de contact (5) peuvent être déplacés respectivement entre une position étendue dans laquelle la borne électrique (12) fait saillie à l'extérieur dans la zone d'une surface latérale sur le boîtier (2) et un contact électrique peut être formé en tant que barre omnibus au moyen de la borne électrique (12), et une position rétractée dans laquelle la borne électrique (12) est disposée dans le boîtier (2) et le contact électrique est détaché ;
- disposer l'adaptateur de barre omnibus (1) dans une barre omnibus (30) et
- mettre en contact l'adaptateur de barre omnibus (1) dans la barre omnibus (30), dans lequel un arbre à cames unique (9) étant ainsi agencé de manière rotative dans le boîtier (2) de l'adaptateur de barre omnibus (1) et présentant un agencement de cames (10) qui sont respectivement associées à au moins un des éléments de contact (5), est tourné de telle sorte qu'au moins un des éléments de contact (5) se déplace de la position rétractée à la position étendue et entre ainsi en contact avec une borne électrique de la barre omnibus (30),
dans lequel au moins une première came de l'agencement de cames (10) pour l'actionnement de deux des éléments de contact (5), qui sont disposés sur des côtés opposés par rapport à l'arbre à cames unique (9), est associée conjointement, de sorte que dans de différentes positions de rotation de l'arbre à cames unique (9) respectivement exactement un des deux éléments de contact est déplacé dans la position étendue au moyen de la première came,
**caractérisé en ce que** les éléments de contact (5) dans le boîtier (2) s'étendent essentiellement dans la direction longitudinale, l'arbre à cames unique (9) pouvant tourner autour d'un axe de rotation dans le boîtier (2) qui s'étend essentiellement transversalement à la direction longitudinale, et dans lequel l'adaptateur de barre omnibus (1) est formé pour être inséré dans un espace de montage (31) d'une barre omnibus (30) de telle manière que la direction longitudinale du boîtier (2) s'étende parallèlement à une direction longitudinale de la barre omnibus (30).
